# EUROPEAN PATENT SPECIFICATION

(11) **EP 1 589 139 B1**
(45) Date of publication and mention of the grant of the patent: **14.01.2009**
(21) Application number: 05008550.5
(22) Date of filing: 19.04.2005
(51) Int. Cl.: D04H 1/64, D06M 15/333, C08F 218/04

(54) **Nonwovens with binders of high wet/dry tensile strength ratio**
Vliesstoffe mit Bindern einer hohen Nass- und Trockenreissfestigkeit
Non-tissés contenant des liants présentant un rapport de resistance à la traction à l'état humide/sec élevé

(30) Priority: 23.04.2004 US 830550
(43) Date of publication of application: 26.10.2005
(73) Proprietor: Wacker Chemical Corporation, Adrian, MI 49221-9397 (US)
(72) Inventor: Goldstein, Joel Erwin, Allentown, PA 18104-2903 (US); Pangrazi, Ronald Joseph, Fleetwood, PA 19522 (US)
(74) Representative: Schwabe - Sandmair - Marx

(56) References cited:
- EP-A- 0 409 036
- US-A1- 2003 176 133
- US-B1- 6 472 462

## Description

### BACKGROUND OF THE INVENTION

Nonwoven products or fabrics comprise loosely assembled webs or masses of fibers bound together with an adhesive binder. Webs find application in a number of end uses, including premoistened wipes, paper towels, disposable diapers, filtration products and disposable wipes. Pre-moistened cleansing wipes commonly referred to as wet wipes and towelettes include a substrate, such as a nonwoven web, pre-moistened with a lotion, such as an aqueous lotion.

There are two basic types of containers for providing sheets of pre-moistened wipes: a reach-in container or tub and a pop-up container. In a reach-in container the trailing edge of a wipe is interwoven with the leading edge of the next wipe. When the sheet is extracted, a subsequent sheet is pulled from the tub. In a pop-up container, wipes are in roll form. When a wipe is pulled through an aperture or opening in the pop-up container, a nub of the subsequent wipe is also pulled through the aperture.

There are many factors that lead to acceptable nonwoven products. Two major factors are the wet tensile strength and "feel" of the nonwoven product. Personal care products such as tissues, handwipes and sanitary napkins must have sufficient wet tensile strength to remain intact when wet. However, many nonwoven applications such as premoistened wipes which incorporate harsh lotions have higher wet tensile strength requirements than do personal care products. Premoistened wipes must also have sufficient wet strength to withstand the stresses imposed upon each wipe as it is removed from the container. Specifically each wipe must not rip or tear as it is being removed from the container. A secondary factor is that the web have sufficient softness or feel for those applications where the web is contacted with the skin.

Historically, to achieve desirable or sufficient wet tensile strength it has been common practice to elevate the dry tensile strength of the polymer or use higher add-on levels of polymer. However, the level of wet tensile typically plateaus at a performance level below what is required. Increasing the level of self-crosslinking monomer does not enhance performance. Higher dry tensile strengths in a nonwoven product tends to impart stiffness or a hardness to the product and uncomfortable to the touch.

To have good market acceptance for use in nonwoven applications the polymers should also have non-block characteristics. Blocking is defined as unwanted adhesion between touching layers of an adhesive impregnated substrate to itself or an uncoated substrate. This can occur under moderate pressure, temperature, or high relative humidity (RH) as bonded nonwoven substrates are rolled or wound upon themselves or stacked upon themselves during storage or prior to fabrication in final consumer form.

Representative patents illustrating various binder compositions used in the nonwoven art include:

U.S. Pat. No. 3,081,197 discloses a nonwoven binder comprising polymers of vinyl acetate, another polymerizable compound as an internal plasticizer, and a post-curable comonomer such as N-methylol acrylamide (NMA).

U.S. Pat. No. 3,380,851 discloses a binder comprising an interpolymer of vinyl acetate-ethylene-N-methylol acrylamide. The ethylene content is from 5 to 40 % by weight.

U.S. Pat. No. 4,449,978 discloses a process for forming vinyl acetate-ethylene nonwoven binders having reduced formaldehyde emitting content. The crosslinking agent is a mixture of N-methylol acrylamide and acrylamide.

U.S. Pat. No. 5,540,987 discloses the formation of formaldehyde free and formaldehyde reduced vinyl acetate/ethylene binders for nonwoven products. These binders are formed by emulsion polymerization using an initiator system based upon an organic peroxide and ascorbic acid. The crosslinking agent can be N-methylol acrylamide for nonwovens of reduced formaldehyde and iso-butoxy methyl acrylamide for formaldehyde free nonwoven products.

US 2003/0176133 A1 discloses high wet-strength fibrous substrates made of chemically bonded fibers where the fibers are bound with a polymeric in amount sufficient to bind the fibers together to form a self sustaining web. The polymers are comprised primarily are at least 50% vinyl acetate and a crosslinking monomer, e.g., N-methylol acrylamide and N-methylol acrylamide/acrylamide mixtures. Example 10 discloses a polymer comprised of vinyl acetate/ethylene/vinyl versatate/NMA/acrylamide having a Tg of -17°C as a binder for nonwoven substrates.

### BRIEF SUMMARY OF THE INVENTION

This invention is directed to an improvement in a crosslinkable vinyl acetate/vinyl versatate based polymeric binder for use in nonwoven applications. The improvement in the binder for nonwoven and, particularly premoistened wipes, resides in the process for the production of a polymer comprised of vinyl acetate and vinyl versatate produced by delayed addition of vinyl versatate where the vinyl versatate is polymerized into the polymer by delayed addition such that vinyl versatate rich polymer segments are formed. Preferably, polymerized units of an *in situ* or internal crosslinking (polyolefinically unsaturated) monomer are incorporated into the polymer.
Typically, 0.005 to 1.5 wt % of the polyolefinically unsaturated monomer is incorporated into the polymer.

Significant advantages in nonwoven products can be achieved and they include:
an ability to produce nonwoven webs using vinyl acetate crosslinking polymers, which have a high wet/dry tensile strength ratio;
an ability to produce a nonwoven products having excellent wet and dry tensile strength;
an ability to produce a nonwoven product having excellent absorbency rate;
an ability to produce nonwoven products having exceptional softness; and,
an ability to produce nonwoven webs having the above properties using industry acceptable polymer binder add-on levels.

### DETAILED DESCRIPTION OF THE INVENTION

The invention improves upon existing emulsion polymerized vinyl acetate crosslinking emulsion polymer technology based upon moderate Tg vinyl acetate-versatate nonwoven products.

The aqueous based emulsion polymerized vinyl acetate-vinyl versatate polymers are based upon a polymer comprised of polymerized units of vinyl acetate, vinyl versatate and a crosslinking monomer. The vinyl acetate content mag range from 30 to 90 wt%, preferably from 40 to 80 wt%, the vinyl versatate content ranges from 15 to 45 wt%, and the crosslinking monomer may range from 1-10 wt%, preferably from 3 to 8 wt% of the polymer. It is common to incorporate ethylene into such polymer and it ranges from 0 to 25 wt%, preferably from 2 to 25 wt% and most preferably from 2.5 to 15% by weight.

It has been found that in the development of vinyl acetate-vinyl versatate polymers for nonwoven applications by emulsion polymerization that the concentration of N-methylol acrylamide in the polymer is not solely responsible for its use as a nonwoven adhesive. The inclusion of *in-situ* crosslinkers (polyolefinically unsaturated monomers) such as triallylcyanurate or hexanediol diacrylate also participates in boosting the wet and dry tensile strength of the polymer. For example, when the polymer is formed with the incorporation of an *in-situ* crosslinker, the wet and dry tensile strengths are higher than those polymers where the polymer is not formed in the presence of an *in-situ* crosslinker incorporated into the backbone. Typically, these *in situ* crosslinking monomers are added in an amount of from 0.005 to 1.5% by weight of the polymer.

Internal crosslinking monomers are polyolefinic which operate to build the insoluble portion of the polymer to a level of at least about 55% in tetrahydrofuran. Absent the use of an internal crosslinking monomer, the insoluble fraction of a batch polymerized vinyl acetate/vinyl versatate polymer will be 50% and below. Internal or crosslinking monomers polymerized *in situ* also build the molecular weight of the polymer. Number average molecular weights (Mn) of from 60,000 to 300,000, generally from 75,000 to about 200,000 daltons, are preferred. Examples of internal crosslinking monomers include triallylcyanurate and, C₂₋₈ di(meth)acrylates, such as hexanediol diacrylate.

Vinyl versatate represents vinyl esters of saturated monocarboxylic acids of highly branched structure containing 9 to 11 carbon atoms. Commercially, vinyl versatate is available under the trademark Veova®. Three grades of Veova are Veova 9, Veova 10 and Veova 11; the number indicates the number of carbons in the acid portion of the vinyl ester.

Crosslinking monomers suited for forming the nonwoven binder include N-methylol acrylamide, a mixture of N-methylol acrylamide and acrylamide, typically in a 50/50 ratio, which is often referred to as MAMD; acrylamidobutyraldehyde dimethylacetal, acrylamidobutyraldehyde diethyl acetal, acrylamidoglycolic acid, methylacrylamidoglycolate methyl ether and isobutylmethylol acrylamide, N-methylol acrylamide and mixtures of N-methylol acrylamide and acrylamide are the crosslinkers of choice and are the ones of commercial choice for polymers of reduced free formaldehyde emissions.

Other comonomers conventionally employed in the emulsion polymerization of polymers for nonwoven goods can be used. Typically, from 0 to 10% by weight of polymerized comonomer units are incorporated. Examples of comonomers include C₁₋₈ (meth)acrylates, such as butyl and 2-ethylhexyl acrylate, ethylene (as previously mentioned), and carboxylic acids such as (meth)acrylic acid. Carboxylic acids, such as acrylic acid, can be used to improve the absorption rate of the polymer at high levels of vinyl versatate incorporation.

Examples of desired polymers are comprised of vinyl acetate/ethylene/vinyl versatate/NMA/triallylcyanurate; and vinyl acetate/ethylene/vinyl versatate/NMA/acrylamide/triallylcyanurate;

The T_{g} of the polymer should range from 35 to -20°C, preferably from 15 to -10°C.

It has been found that the distribution of vinyl acetate and vinyl versatate in the polymer has an effect on both the wet and dry tensile strength of the polymer and its absorption rate. Improvement in these properties can be achieved when there is delayed addition of the vinyl versatate in the polymerization process. Staged polymerization of the vinyl versatate permits one to reduce the level of vinyl versatate and achieve equivalent to superior wet strengths as compared to batch polymerization.

Delayed addition or staged polymerization refers to a process whereby one monomer, in this case vinyl versatate, is added over a period of time to the polymerization medium such that a major portion of the other monomer, in this case, vinyl acetate, is polymerized prior to polymerization of the vinyl versatate thus generating large portions of vinyl versatate rich polymer segments. Delayed addition typically involves charging a major portion, e.g., often greater than 50 to 75% of the vinyl acetate charge to the reactor and delaying the addition of the vinyl versatate over the course of the polymerization. Extreme staged addition of vinyl versatate involves polymerizing a large portion of the vinyl acetate, e.g., at least 35% prior to delaying addition of the vinyl versatate over the course of the polymerization.

Polymerization of the monomers in the emulsion polymerization process can be initiated by thermal initiators or by redox systems. Thermal initiators are well known in the emulsion polymer art and include, for example, ammonium persulfate and sodium persulfate. Suitable redox systems are based upon sulfoxylates, and peroxides. Sodium formaldehyde sulfoxylate, a sulfininc acid, e.g., Bruggolite FF-6, or isomers of ascorbic acid and hydrogen peroxide or organic peroxides such as *t*-butyl hydroperoxide (t-BHP) and *t*-butyl peroxybenzoate are representative. The amount of oxidizing and reducing agent in the redox system is 0.1 to 3 wt %.

Effective emulsion polymerization reaction temperatures range from 30 and 100 °C; preferably, 55 to 90°C, depending on whether the initiator is a thermal or redox system.

The polymerization may be carried out at atmospheric pressures except when ethylene is a comonomer. The ethylene and, optionally, other monomers, then are introduced under a pressure of less than 2000 psig (13,891 kPa). This is performed under agitation while the temperature is increased to reaction temperature. Initiator, crosslinking monomer, and emulsifier are staged or added incrementally over the reaction period, and the reaction mixture maintained at reaction temperature for a time required to produce the desired product. Preferred pressures range from 50 to 1800 psig (446 to 12,512 kPa). Some of the monomers may even be batched into the reactor prior to the addition of any initiator.

The formation of vinyl acetate-ethylene polymers suited for nonwoven applications employ conventional stabilizer systems. The stabilizing system must support formation of emulsions having a solids content of at least 40% by weight, generally 50% and higher. Stabilizing systems may be based upon mixtures of protective colloids and surfactants and mixtures of surfactants.

A protective colloid such as polyvinyl alcohol or cellulosic colloid may be employed as a component of one of the suitable stabilizing system described herein. An example of a preferred cellulosic protective colloid is hydroxyethyl cellulose. The protective colloid can be used in amounts of 0.1 to 10 wt%, preferably 0.5 to 5 wt%, based on the total monomers. The use of polyvinyl alcohol is acceptable but not preferred when N-methylol acrylamide is used as a crosslinker.

The surfactant or emulsifier can be used at a level of 1 to 10 wt%, preferably 1.5 to 6 wt%, based on the total weight of monomers and can include any of the known and conventional surfactants and emulsifying agents, principally the nonionic, anionic, and cationic materials, heretofore employed in emulsion polymerization. Among the anionic surfactants found to provide good results are alkyl sulfates and ether sulfates, (some including ethylene oxide units) such as sodium lauryl sulfate, sodium octyl sulfate, sodium tridecyl sulfate, and sodium isodecyl sulfate, sodium laureth sulfate, sodium octeth sulfate, sodium trideceth sulfate, sulfonates, such as dodecylbenzene sulfonate, alpha olefin sulfonates and sulfosuccinates, and phosphate esters, such as the various linear alcohol phosphate esters, branched alcohol phosphate esters, and alkylphenolphosphate esters. Anionic surfactants that can polymerize with the vinyl monomers can also be utilized. Examples of these include sodium vinyl sulfonate (SVS) and sodium 2-acrylamide-2-methyl-1-propanesulfonate (AMPS).

Examples of suitable nonionic surfactants include the Igepal surfactants which are members of a series of alkylphenoxy-poly(ethyleneoxy)ethanols having alkyl groups containing from 7 to 18 carbon atoms, and having from 4 to 100 ethyleneoxy units, such as the octylphenoxy poly(ethyleneoxy)ethanols, nonylphenoxy poly(ethyleneoxy)ethanols, and dodecylphenoxy poly(ethyleneoxy)ethanols. Others include fatty acid amides, fatty acid esters, glycerol esters, and their ethoxylates, ethylene oxide/propylene oxide block polymers, secondary alcohol ethoxylates, and tridecylalcohol ethoxylates.

Average particle size distributions for the polymer particles of the emulsion polymers of this invention range from 0.05 microns to 2 microns, preferably 0.10 microns to 1 micron.

In the formation of nonwoven products, the starting layer or mass can be formed by any one of the conventional techniques for depositing or arranging fibers in a web or layer. These techniques include carding, garnetting and air-laying. Individual webs or thin layers formed by one or more of these techniques can also be laminated to provide a thicker layer for conversion into a fabric. Typically, the fibers extend in a plurality of diverse directions in general alignment with the major plane of the fabric, overlapping, intersecting, and supporting one another to form an open, porous structure. When reference is made to "cellulose" fibers, those fibers containing predominantly C₆H₁₀O₅ groupings are meant. Thus, examples of the fibers to be used in the starting layer are the natural cellulose fibers such as wood pulp, cotton, and hemp and the synthetic fibers such as polypropylene, polyesters and rayon. Often the fibers in the starting layer may comprise natural fibers such as wool, or jute; artificial fibers such as cellulose acetate; synthetic fibers such as polyamides, nylon, polyesters, acrylics, polyolefins, e.g., polyethylene, polyvinyl chloride and polyurethane alone or in combination with one another.

The fibrous starting layer is subjected to at least one of the several types of bonding operations to anchor the individual fibers together to form a self-sustaining web. Some of the better known methods of bonding are spraying, overall impregnation, or printing the web with intermittent or continuous straight or wavy lines or areas of binder extending generally transversely or diagonally across the web and additionally, if desired, along the web.

The amount of binder, calculated on a dry basis, applied to the fibrous starting web should be at least 3 wt% and suitably ranges from 10 to 100% or more by weight of the starting web, preferably from 10 to 30% by weight of the starting web. The impregnated web is then dried and cured. Thus, the fabrics are suitably dried by passing them through an air oven or the like and then through a curing oven. Acid catalysts such as mineral acids, such as hydrogen chloride, or organic acids, such as citric acid or oxalic acid, or acid salts such as ammonium chloride and diammonium phosphate, are suitably used to promote crosslinking as known in the art. The amount of catalyst is generally 0.5 to 2% of the total polymer.

Typical conditions to achieve optimal cross-linking are sufficient time and temperature such as drying at 150 to 200 °F (66 to 93 °C) for 4 to 6 minutes, followed by curing at 300 to 310 °F (149 to 154 °C) for 3 to 5 minutes or more. However, other time-temperature relationships can be employed as is well known in the art, shorter times at higher temperatures or longer times at lower temperatures being used.

The following examples are illustrative of various embodiments of the invention and are not intended to restrict the scope thereof. MAMD, a 50/50 mixture of N-methylol acrylamide/acrylamide, was used as the crosslinking monomer. Reported polymer percentages include only the basic polymer backbone composition and exclude the crosslinking monomer, MAMD. Typically, the level of MAMD was about 5% based upon the weight of the polymer. The level of internal crosslinking agent in the polymer backbone in some cases has been approximated to facilitate evaluation of the examples. Table 1, to be described, provides the exact level of internal crosslinking monomer. The polymer composition given in each of the examples represents the non-functional composition of the polymer backbone.

### COMPARATIVE EXAMPLE 1

### Batch Production Of Vinyl Acetate/Ethylene/Veova 10 Nonwoven Binder

This example is a control example based upon the preferred polymerization procedure described in Example 10 of US 2003/0176133 A1 with the exception that the Veova 10 level was adjusted to approximate twice the level employed.

A one-gallon (4.55l) stainless steel pressure reactor was charged with the following mixture:

| Material | Mass charged, g |
|---|---|
| Dl Water | 770.9 |
| Sodium citrate | 0.7 |
| Ferric Ammonium Sulfate (5% aq.soln.) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 746.1 |
| Veova 10 | 746.1 |
| Ethylene | 295 |

| | |
|---|---|
| Aerosol A-102 laureth disodium sulfosuccinate (30% aqueous solution); supplied by Cytec. Rhodacal DS-10 sodium dodecylbenzene sulfonate supplied by Rhodia. | |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80°C over 80 minutes. The MAMD was completed at the 94 minute mark followed by holding the reaction mixture at temperature for another 5 minutes. The reaction was then cooled to 60°C, transferred to a degasser, and 1.5 g of Foamaster VF defoamer was added. The pH was adjusted following the polymerization.

The following properties of the resulting emulsion polymer were measured:

| | |
|---|---|
| Polymer Composition (by solids calculation) | 15% Ethylene |
| | 42.5% Vinyl acetate |
| | 42.5% Veova 10 |
| T_{g} Onset (°C) | -8.9 |
| Viscosity (60/12 rpm) (cps) | 33/12 |
| 100/325 mesh grit (ppm) | < 160 / <170 |
| % solids | 50.7 |
| pH | 4.6 |
| Molecular Weight (Mn) in Daltons | 65,000 |
| Insoluble Fraction | 48.6 % |

### Comparative Example 2

### Batch Production Of Vinyl Acetate/EthyleneNeova 10 Nonwoven Binder

This example is similar to Example 1 except the Veova 10 level was adjusted to approximate a level similar to that in Example 10 of US 2003/0176133 A1.

A one-gallon (4.55l) stainless steel pressure reactor was charged with the following mixture:

| Material | Mass charged, g |
|---|---|
| Dl Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 1119.2 |
| Veova 10 | 373 |
| Ethylene | 295 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 2) were measured:

| | |
|---|---|
| Polymer Composition (by solids calculation) | 15% Ethylene |
| | 65.5% Vinyl acetate |
| | 19.5% Veova 10 |
| T_{g} Onset (°C) | -3.0 |
| Viscosity (60/12 rpm) (cps) | 18/40 |
| 100/325 mesh grit (ppm) | < 160 / <10 |
| % solids | 53.8 |
| pH | 5.54 |
| Molecular Weight (Mn) in Daltons | 73,000 |
| Insoluble Fraction | 49.8% |

### Example 3 (not part of the invention)

### Batch Production of Vinyl Acetate/Ethylene/Veova 10/Triallylcyanurate (TAC) Nonwoven Binder

This example is similar to Example 2 except that an internal crosslinking agent, i.e., triallylcyanurate, was added *in situ.* The purpose of this example was to determine whether the use of such monomer would impact the wet/dry strength of the nonwoven product.

A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate Rhodacal DS-10 sodium dodecylbenzene | 71.8 |
| sulfonate | 14.4 |
| Sodium vinyl sulfonate (25% aq soln) | 14.4 |
| Vinyl Acetate | 1119.2 |
| Veova 10 | 373 |
| Triallylcyanurate | 1.5 |
| Ethylene | 295 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32°C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80°C over 20 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 3) were measured:

| | |
|---|---|
| Polymer Composition (by solids calculation) | 15% Ethylene |
| | 66.5% Vinyl acetate |
| | 19.5% Veova 10 |
| | 0.084 % TAC |
| T_{g} Onset (°C) | -6.7 |
| Viscosity (60/12 rpm) (cps) | 28/130 |
| 100/325 mesh grit (ppm) | < 160 / <10 |
| % solids | 51.6 |
| pH | 5.56 |
| Molecular Weight (Mn) in Daltons | 274,000 |
| Insoluble Fraction | 68.2% |

### Example 4 (not part of the invention)

### Pseudo-Batch Production Of Vinyl Acetate/Ethylene/Veova 10/TAC Nonwoven Binder

This example is similar to Example 1 with the primary exceptions relating to the use of an *in situ* crosslinking agent and the use of staged polymerization. In this example, some of the vinyl acetate and vinyl versatate were added with the initial batch, i.e., ~85% and ~15% was added near the end of the polymerization.

A one-gallon (4.55l) stainless steel pressure reactor was charged with the following mixture:

| Material | Mass charged, g |
|---|---|
| Dl Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Sodium vinyl sulfonate (25% aq soln) | 14.9 |
| Vinyl Acetate | 654.5 |
| Veova 10 | 654.4 |
| Triallylcyanurate | 0.2 |
| Ethylene | 317 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.6 |
| Vinyl Acetate | 115.5 |
| Veova 10 | 115.5 |

Agitation at 200 rpm was begun with a nitrogen purge. Agitation was then increased to 1000 rpm and the reactor heated to 32 °C. After pressurizing the reactor with 317 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 85 °C over 80 minutes. At the 75 minute mark, the vinyl acetate/Veova 10 delay was added at a rate of 15.4 g/min over the next 15 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 4) were measured:

| | |
|---|---|
| Polymer Composition (by solids calculation) | 15% Ethylene |
| | 42.5% Vinyl acetate |
| | 42.5% Veova 10 |
| | 0.084 % TAC |
| T_{g} Onset (°C) | -14.3 |
| Viscosity (60/12 rpm) (cps) | 60/64 |
| 100/325 mesh grit (ppm) | < 160 / <50 |
| % solids | 51.0 |
| pH | 5.55 |
| Molecular Weight (Mn) in Daltons | 247,000 |
| Insoluble Fraction | 65.8% |

### Example 5

### Extreme Staged Production Of Vinyl Acetate/Ethylene/Veova 10/TAC Nonwoven Binder

This example is similar to Example 4 except for the manner of addition of the vinyl versatate. Here, no vinyl versatate was added with initial batch and nearly all of the vinyl versatate was added after at least 50% of the vinyl acetate was polymerized.

A one-gallon (4.55l) stainless steel pressure reactor was charged with the following mixture:

| Material | Mass charged, g |
|---|---|
| Dl Water | 625.8 |
| Sodium citrate | 0.73 |
| Ferric Ammonium Sulfate (5% aq soln) | 2.1 |
| Aerosol A-102 laureth disodium sulfosuccinate | 111.15 |
| Rhodacal DS-10 sodium dodecylbenzene sulfonate | 14.9 |
| Sodium vinyl sulfonate (25% aq soln) | 14.9 |
| Vinyl Acetate | 1019.0 |
| Triallylcyanurate | 0.2 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.6 |
| Veova 10 | 531 |

Agitation at 200 rpm was begun with a nitrogen purge. Agitation was then increased to 1000 rpm and the reactor heated to 32 °C. After pressurizing the reactor with 50 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 0.75 g/min, and the sodium erythorbate delay was re-started at 0.7 g/min. The reaction temperature was ramped up to 85°C over 80 minutes. At the 60 minute start the Veova 10 delay was added at a rate of 17.7 g/min and the MAMD delay increased to 7.02 g/min for the next 30 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 5) were measured:

| | |
|---|---|
| Polymer Composition (by solids calculation) | 2.5% Ethylene |
| | 63.9% Vinyl acetate |
| | 33.3% Veova 10 |
| | 0.084 % TAC |
| T_{g} Onset (°C) | 8.1 |
| Viscosity (60/12 rpm) (cps) | 1628/3579 |
| 100/325 mesh grit (ppm) | < 400 / <50 |
| % solids | 50.3 |
| pH | 5.55 |
| Molecular Weight (Mn) in Daltons | 175300 |
| Insoluble Fraction | 59.3% |

### Example 6

### Extreme Staged Production Of Vinyl Acetate/Ethylene/Veova 10/TAC Nonwoven Binder

This example is similar to Example 5 except that the level of vinyl versatate was reduced.

A one-gallon (4.55l) stainless steel pressure reactor was charged with the following mixture:

| Material Mass charged, g | |
|---|---|
| Dl Water | 625.8 |
| Sodium citrate | 0.73 |
| Ferric Ammonium Sulfate (5% aq soln) | 2.1 |
| Aerosol A-102 laureth disodium sulfosuccinate | 111.15 |
| Rhodacal DS-10 sodium dodecylbenzene sulfonate | 14.9 |
| Sodium vinyl sulfonate (25% aq soln) | 14.9 |
| Vinyl Acetate | 1162.4 |
| Triallylcyanurate | 0.2 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.6 |
| Veova 10 | 387.6 |

Agitation at 200 rpm was begun with a nitrogen purge. Agitation was then increased to 1000 rpm and the reactor heated to 32°C. After pressurizing the reactor with 50 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 0.75 g/min, and the sodium erythorbate delay was re-started at 0.7 g/min. The reaction temperature was ramped up to 85°C over 80 minutes. At the 60 minute point, (2/3 of the scheduled reaction time had been completed) the Veova 10 delay was started at a rate of 17.7 g/min and the MAMD delay increased to 7.02 g/min for the next 30 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 6) were measured:

| | |
|---|---|
| Polymer Composition (by solids calculation) | 2.5% Ethylene |
| | 73.1 % Vinyl acetate |
| | 24.4% Veova 10 |
| | 0.084 % TAC |
| T_{g} Onset (°C) | 8.1 |
| Viscosity (60/12 rpm) (cps) | 1628/3579 |
| 100/325 mesh grit (ppm) | < 400 / <50 |
| % solids | 50.3 |
| pH | 5.55 |
| Molecular Weight (Mn) in Daltons | 111600 |
| Insoluble Fraction | 64.7% |

### Example 7

### Staged Production Of Vinyl Acetate/EthyleneNeova 10/TAC Nonwoven Binder

This example is similar to Example 5 with the exception that the vinyl versatate was added at the time of initiation and its addition delayed into the polymerization medium over the course of the polymerization.

A one-gallon (4.55l) stainless steel pressure reactor was charged with the following mixture:

| Material | Mass charged, g |
|---|---|
| Dl Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Sodium vinyl sulfonate (25% aq soln) | 14.9 |
| Vinyl Acetate | 1001.0 |
| Triallylcyanurate | 0.4 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.4 |
| Veova 10 | 540 |

Agitation at 200 rpm was begun with a nitrogen purge. Agitation was then increased to 1000 rpm and the reactor heated to 32 °C. After pressurizing the reactor with 50 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 0.75 g/min, and the sodium erythorbate delay was re-started at 0.7 g/min. The Veova 10 delay was started at this time at a rate of 5.75 g/min. The reaction temperature was ramped up to 85 °C over 80 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 7) were measured:

| | |
|---|---|
| Polymer Composition (by solids calculation) | 2.5% Ethylene |
| | 63.5% Vinyl acetate |
| | 33.5% Veova 10 |
| | 0.16 % TAC |
| T_{g} Onset (°C) | 13.13 |
| Viscosity (60/12 rpm) (cps) | 398/430 |
| 100/325 mesh grit (ppm) | < 50 / <10 |
| % solids | 54.7 |
| pH | 5.52 |
| Molecular Weight (Mn) in Daltons | 104450 |
| Insoluble Fraction | 68.3% |

### Comparative Example 8

### Batch Production Of Vinyl Acetate/EthyleneNeova 9 Nonwoven Binder

This example is similar to Example 1 except that Veova 9 was used in place of Veova 10. A one-gallon (4.55l) stainless steel pressure reactor was charged with the following mixture:

| Material | Mass charged, g |
|---|---|
| Dl Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 746.1 |
| Veova 9 | 746.1 |
| Ethylene | 240 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80°C over 80 minutes.

The MAMD rate was decreased at the 50 minute mark to 1.4 g/min and was completed at the 94 minute mark followed by holding the reaction mixture at temperature for another 5 minutes. The reaction was then cooled to 60 °C, transferred to a degasser, and 1.5 g of Foamaster VF defoamer added.

The following properties of the resulting emulsion polymer (Example 8) were measured:

| | |
|---|---|
| Polymer Composition (by solids calculation) | 8% Ethylene |
| | 46.0% Vinyl acetate |
| | 46.0% Veova 9 |
| T_{g} Onset (°C) | 1.2 |
| Viscosity (60/12 rpm) (cps) | 188/110 |
| 100/325 mesh grit (ppm) | < 100 / <10 |
| % solids | 53.0 |
| pH | 5.51 |
| Molecular Weight (Mn) in Daltons | 68,000 |
| Insoluble Fraction | 45.7% |

### Example 9 (not part of the invention)

### Batch Production Of Vinyl Acetate/Ethylene/Veova 9/TAC Nonwoven Binder

This example is similar to Example 8 except that an *in situ* crosslinker was used. A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 746.1 |
| Veova 9 | 746.1 |
| Triallylcyanurate | 0.32 |
| Ethylene | 200 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 245.9 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 80 minutes.

The MAMD rate was decreased at the 50 minute mark to 1.4 g/min and was completed at the 94 minute mark followed by holding the reaction mixture at temperature for another 5 minutes. The reaction was then cooled to 60 °C, transferred to a degasser, and 1.5g of Foamaster VF defoamer was added.

The following properties of the resulting emulsion polymer (Example 9) were measured:

| | |
|---|---|
| Polymer Composition (by solids calculation) | 5% Ethylene |
| | 47.4% Vinyl acetate |
| | 47.4% Veova 9 |
| | 0.16% TAC |
| T_{g} Onset (°C) | 13.1 |
| Viscosity (60/12 rpm) (cps) | 428/540 |
| 100/325 mesh grit (ppm) | < 200 / <20 |
| % solids | 49.1 |
| pH | 6.58 |
| Molecular Weight (Mn) in Daltons | 125,000 |
| Insoluble Fraction | 58.4% |

### Example 10 (not part of the invention)

### Pseudo-Batch Production Of Vinyl Acetate /Veova 10/TACNonwoven Binder

This example is similar to Example 4 except that there is no ethylene in the polymer. A one-gallon (4.55l) stainless steel pressure reactor was charged with the following mixture:

| Material . | Mass charged, g |
|---|---|
| DI Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Sodium vinyl sulfonate (25% aq soln) | 14.9 |
| Vinyl Acetate | 654.5 |
| Veova 10 | 654.4 |
| Triallylcyanurate | 0.2 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.6 |
| Vinyl Acetate | 115.5 |
| Veova 10 | 115.5 |

Agitation at 200 rpm was begun with a nitrogen purge. Agitation was then increased to 1000 rpm and the reactor heated to 32 °C. The reactor was charged with 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 85°C over 80 minutes. The vinyl acetate/Veova 10 delay was started at the 75 minute mark and added at a rate of 15.4 g/min over the next 15 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 10) were measured:

| | |
|---|---|
| Polymer Composition (by solids calculation) | 49.95% Vinyl acetate |
| | 49.95% Veova 10 |
| | 0.12 % TAC |
| T_{g} Onset (°C) | 15.9 |
| Viscosity (60/12 rpm) (cps) | 76/50 |
| 100/325 mesh grit (ppm) | < 100 / <20 |
| % solids | 54.0 |
| pH | 5.56 |
| Molecular Weight (Mn) in Daltons | 103,550 |
| Insoluble Fraction | 78.2% |

### Example 11 (not part of the invention)

### Batch Production Of Vinyl Acetate/Ethylene/Veova 10/TAC Nonwoven Binder

This example is similar to Example 3 except that the level of Veova 10 has been reduced. A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 1343 |
| Veova 10 | 149.2 |
| Triallylcyanurate | 1.5 |
| Ethylene | 200 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32°C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium crythorbato delay was re-started at 0.7 g/min. The reaction temperature was ramped up to 80°C over 20 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 11) were measured:

| | |
|---|---|
| Polymer Composition (by solids calculation) | 10% Ethylene |
| | 81.0% Vinyl acetate |
| | 9.0% Veova 10 |
| | 0.084% TAC |
| T_{g} Onset (°C) | 13.2 |
| Viscosity (60/12 rpm) (cps) | 234/260 |
| 100/325 mesh grit (ppm) | < 60000/ / <50 |
| % solids | 52.8 |
| pH | 5.55 |
| Molecular Weight (Mn) in Daltons | 295,000 |
| Insoluble Fraction | 71.8% |

### Example 12 (not part of the invention)

### Batch Production Of Vinyl Acetate/Ethylene/Veova 10/TAC Nonwoven Binder

This example is similar to Example 11 except that the Veova 10 level was increased with similar ethylene levels. A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 1119.2 |
| Veova 10 | 373 |
| Triallylcyanurate | 1.5 |
| Ethylene | 200 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 12) were measured:

| | |
|---|---|
| Polymer Composition (by solids calculation) | 10% Ethylene |
| | 67.5% Vinyl acetate |
| | 22.5% Veova 10 |
| | 0.084 % TAC |
| T_{g} Onset (°C) | 4.9 |
| Viscosity (60/12 rpm) (cps) | 148/160 |
| 100/325 mesh grit (ppm) | < 150 / <50 |
| % solids | 52.7 |
| pH | 5.58 |
| Molecular Weight (Mn) in Daltons | 288,000 |
| Insoluble Fraction | 70.3% |

### Example 13 (not part of the invention)

### Batch Production Of Vinyl Acetate/Ethylene/Veova 10/TAC Nonwoven Binder

This example is similar to Examples 11 and 12 except that the Veova 10 level is higher than in Example 11 and lower than Example 12 at similar ethylene levels. A one-gallon (4.55l) stainless steel pressure reactor was charged with the following mixture:

| Material | Mass charged, g |
|---|---|
| Dl Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 1223.4 |
| Veova 10 | 268.6 |
| Triallylcyanurate | 1.15 |
| Ethylene | 200 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution was followed by addition of *t-*butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80°C over 20 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 13) were measured:

| | |
|---|---|
| Polymer Composition (by solids calculation) | 10% Ethylene |
| | 73.8% Vinyl acetate |
| | 16.2% Veova 10 |
| | 0.064 % TAC |
| T_{g} Onset (°C) | 7.8 |
| Viscosity (60/12 rpm) (cps) | 108/180 |
| 100/325 mesh grit (ppm) | < 300 / <50 |
| % solids | 53.1 |
| pH | 5.57 |
| Molecular Weight (Mn) in Daltons | 291,000 |
| Insoluble Fraction | 71.1% |

### Example 14 (not part of the invention)

### Batch Production Of Vinyl Acetate/Ethylene/Veova 10/TAC Nonwoven Binder

This example is similar to Example 1 showing the effect of an internal crosslinker at similar Veova 10 levels. A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene sulfonate | 14.4 |
| Sodium vinyl sulfonate (25% aq soln) | 14.4 |
| Vinyl Acetate | 771.2 |
| Veova 10 | 771.2 |
| Triallylcyanurate | 0.1 |
| Ethylene | 295 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32 °C. After pressurizing the reactor with 295 g ethylene, 7.5 g of sodium erythorbate solution followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes.

The MAMD was completed at the 94 minute mark followed by holding the reaction mixture at temperature for another 5 minutes. The reaction was then cooled to 60°C, transferred to a degasser, and 1.5 g of Foamaster VF defoamer was added.

The following properties of the resulting emulsion polymer (Example 14) were measured:

| | |
|---|---|
| Polymer Composition (by solids calculation) | 15% Ethylene |
| | 42.5% Vinyl acetate |
| | 42.5% Veova 10 |
| | 0.006 % TAC |
| T_{g} Onset (°C) | -12.3 |
| Viscosity (60/12 rpm) (cps) | 52/80 |
| 100/325 mesh grit (ppm) | < 150 / <75 |
| % solids | 50.1 |
| pH | 6.56 |
| Molecular Weight (Mn) in Daltons | 135,000 |
| Insoluble Fraction | 56.2% |

### Example 15 (not part of the invention)

### Batch Production Of Vinyl Acetate/EthyleneNeova 10/TAC Nonwoven Binder

This example is similar to Example 14. A one-gallon (4.55l) stainless steel pressure reactor was charged with the following mixture:

| Material | Mass charged, g |
|---|---|
| DI Water | 770.9 |
| Sodium citrate | 0.7 |
| Ferric Ammonium Sulfate (5% aq soln) | 2.2 |
| Aerosol A-102 laureth disodium sulfosuccinate | 71.8 |
| Rhodacal DS-10 sodium dodecylbenzene - sulfonate | 14.4 |
| Sodium vinyl sulfonate (25% aq soln) | 14.4 |
| Vinyl Acetate | 771.2 |
| Veova 10 | 771.2 |
| Triallylcyanurate | 0.3 |
| Ethylene | 295 |

The following delay mixtures were utilized:

| Material | Mass charged, g |
|---|---|
| aqueous 2.6 % *t*-butyl hydroperoxide | 265 |
| aqueous 5.0 % sodium erythorbate pH adjusted to 5.0 with 50% aqueous citric acid | 230 |
| Aqueous 31.75% MAMD | 254.5 |

Agitation at 200 rpm was begun with a nitrogen purge. Agitation was then increased to 1000 rpm and the reactor heated to 32°C. After pressurizing the reactor with 295 g ethylene, 7.5 g of sodium erythorbate solution was added by addition of *t-*butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 15) were measured:

| | |
|---|---|
| Polymer Composition (by solids calculation) | 15% Ethylene |
| | 42.5% Vinyl acetate |
| | 42.5% Veova 10 |
| | 0.016 % TAC |
| T_{g} Onset (°C) | -13.5 |
| Viscosity (60/12 rpm) (cps) | 82/10 |
| 100/325 mesh grit (ppm) | < 250 / <30 |
| % solids | 49.7 |
| PH | 6.53 |
| Molecular Weight (Mn) in Daltons | 185,000 |
| Insoluble Fraction | 73.3% |

### Example 16

### Staged Production Of Vinyl Acetate/Ethylene/Veova 10/TAC Nonwoven Binder

This example is similar to Example 7 with the exception that the level of TAC was increased. A one-gallon (4.55l) stainless steel pressure reactor was charged with the following mixture:

| Material | Mass charged, g |
|---|---|
| DI Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Vinyl Acetate | 1001.0 |
| Triallylcyanurate | 0.4 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 33.74% MAMD/0.64% AMPS | 255.4 |
| Veova 10 | 540 |

| | |
|---|---|
| AMPS is sodium 2-acrylamide-2-methyl-1-propanesulfonate supplied by Lubrizol (50% aqueous solution). | |

Agitation at 200 rpm was begun with a nitrogen purge. Agitation was then increased to 1000 rpm and the reactor heated to 32 °C. After pressurizing the reactor with 50 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 0.75 g/min, and the sodium erythorbate delay was re-started at 0.7 g/min. The Veova 10 delay was started at this time at a rate of 5.75 g/min. The reaction temperature was ramped up to 85 °C over 80 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 16) were measured:

| | |
|---|---|
| Polymer Composition (by solids calculation) | 2.5% Ethylene |
| | 63.5% Vinyl acetate |
| | 33.5% Veova 10 |
| | 0.16 % TAC |
| T_{g} Onset (°C) | 11.23 |
| Viscosity (60/12 rpm) (cps) | 161/168 |
| 100/325 mesh grit (ppm) | < 2500 / <10 |
| % solids | 55.0 |
| pH | 5.56 |
| Molecular Weight (Mn) in Daltons | 130,800 |
| Insoluble Fraction | 66.1% |

### Example 17

### Staged Production of Vinyl Acetate/Ethylene/Veova 10/1,6-Hexanediol Diacrylate (HDODA) Nonwoven Binder

This example is similar to Examples 7 and 16 except that hexanediol diacrylate was employed as an *in situ* crosslinking agent instead of triallylcyanurate. A one-gallon (4.55l) stainless steel pressure reactor was charged with the following mixture:

| Material | Mass charged, g |
|---|---|
| DI Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Sodium vinyl sulfonate (25% aq soln) | 14.9 |
| Vinyl Acetate | 1001.0 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 255.4 |
| Veova 10 | 540 |
| HDODA | 0.4 |

Agitation at 200 rpm was begun with a nitrogen purge. Agitation was then increased to 1000 rpm and the reactor heated to 32°C. After pressurizing the reactor with 50 g ethylene, 7.3 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 0.75 g/min, and the sodium erythorbate delay was re-started at 0.7 g/min. The Veova 10 delay is started at this time at a rate of 5.75 g/min. The reaction temperature was ramped up to 85 °C over 80 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 17) were measured:

| | |
|---|---|
| Polymer Composition (by solids calculation) | 2.5% Ethylene |
| | 63.5% Vinyl acetate |
| | 33.5% Veova 10 |
| | 0.16 % HDODA |
| T_{g} Onset (°C) | 12.13 |
| Viscosity (60/12 rpm) (cps) | 408/450 |
| 100/325 mesh grit (ppm) | < 70 / <20 |
| % solids | 55.3 |
| pH | 5.54 |
| Molecular Weight (Mn) in Daltons | 244,650 |
| Insoluble Fraction | 46.5% |

### Example 18 (not part of the invention)

### Batch Production Of Vinyl Acetate/Ethylene/Veova 10/TAC Nonwoven Binder

This example is similar to Example 1 except the level of ethylene was reduced and TAC added. A one-gallon (4.55l) stainless steel pressure reactor was charged with the following mixture:

| Material | Mass charged, g |
|---|---|
| Dl Water | 900.0 |
| Sodium citrate | 1.0 |
| Ferric Ammonium Sulfate (5% aq soln) | 2.3 |
| Aerosol A-102 laureth disodium sulfosuccinate | 75.0 |
| Rhodacal DS-10 sodium dodecylbenzene sulfonate | 15.0 |
| Sodium vinyl sulfonate (25% aq soln) | 15.0 |
| Vinyl Acetate | 829.0 |
| Veova 10 | 829.0 |
| Triallylcyanurate | 0.2 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 30.0% MAMD | 240.0 |

Agitation at 200 rpm was begun with a nitrogen purge. Agitation was then increased to 1000 rpm and the reactor heated to 32 °C. After pressurizing the reactor with 50 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 18) were measured:

| | |
|---|---|
| Polymer Composition (by solids calculation) | 2.5% Ethylene |
| | 48.75% Vinyl acetate |
| | 48.75% Veova 10 |
| | 0.084 % TAC |
| T_{g} Onset (°C) | 8.6 |
| Viscosity (60/12 rpm) (cps) | 554/690 |
| 100/325 mesh grit (ppm) | < 15 / <5 |
| % solids | 54.1 |
| pH | 5.56 |
| Molecular Weight (Mn) in Daltons | 203,000 |
| Insoluble Fraction | 63.0% |

### Example 19

### Batch Production Of Vinyl Acetate/Ethylene/Veova 10/Acrylic Acid/TAC Nonwoven Binder

This example is similar to Example 18 except that acrylic acid was added to determine its effect on the absorbency rate of the polymer. A one-gallon stainless steel pressure reactor was charged with the following mixture:

| Material | Mass charged, g |
|---|---|
| Dl Water | 625.8 |
| Sodium citrate | 0.73 |
| Ferric Ammonium Sulfate (5% aq soln) | 2.1 |
| Aerosol A-102 laureth disodium sulfosuccinate | 74.1 |
| Rhodacal DS-10 sodium dodecylbenzene sulfonate | 14.9 |
| Sodium vinyl sulfonate (25% aq soln) | 14.9 |
| Vinyl Acetate | 654.5 |
| Veova 10 | 654.5 |
| Triallylcyanurate | 0.4 |
| Ethylene | 50 |

The following delay mixtures were utilized:

| Material | Mass charged, g |
|---|---|
| Aqueous 2.6 % *t*-butyl hydroperoxide | 265 |
| Aqueous 5.0 % sodium erythorbate pH adjusted to 5.0 with 50% aqueous citric acid | 230 |
| Aqueous 37.22% MAMD | 240.0 |
| Vinyl Acetate | 115.5 |
| Veova 10 | 115.5 |
| Acrylic Acid | 19.0 |

Agitation at 200 rpm was begun with a nitrogen purge. Agitation was then increased to 1000 rpm and the reactor heated to 32 °C. After pressurizing the reactor with 50 g ethylene, 7.5 g of sodium erythorbate solution was added followed by addition of *t*-butyl hydroperoxide solution at a rate of 0.5 g/min. At initiation, the *t*-butyl hydroperoxide delay was increased to 1.0 g/min, the MAMD delay was begun at 3.9 g/min, and the sodium erythorbate delay was re-started at 0.7 g/min. The reaction temperature was ramped up to 80 °C over 20 minutes. At the 75 minute mark, the vinyl acetate/Veova 10/acrylic acid delay was started for 15 minutes.

The MAMD was completed at the 94 minute mark followed by holding the reaction mixture at temperature for another 5 minutes. The reaction was then cooled to 60 °C, transferred to a degasser, and 1.5 g of Foamaster VF defoamer was added.

The following properties of the resulting emulsion polymer (Example 19) were measured:

| | |
|---|---|
| Polymer Composition (by solids calculation) | 2.5% Ethylene |
| | 48.75% Vinyl acetate |
| | 48.75% Veova 10 |
| | 0.084 % TAC |
| T_{g} Onset (°C) | 8.2 |
| Viscosity (60/12 rpm) (cps) | 140/60 |
| 100/325 mesh grit (ppm) | < 100 / <25 |
| % solids | 50.9 |
| pH | 5.52 |

### Example 20

### Evaluation of Binders In Nonwoven Web

The binders of Examples 1-19 were evaluated for performance on nonwoven cellulosic substrates. The following procedures were used in the evaluation of the materials described herein.

The binder formulation consisted of an emulsion polymer composition described herein, water, 1% (solids on solids) ammonium chloride (NH₄Cl) as a catalyst for the self crosslinking reaction, and a small amount of a wetting surfactant. The binder composition was diluted to 10% solids and uniformly sprayed onto an airlaid web of a 85:15 blend of cellulose and low melt bicomponent fibers (basis weight 75 g/m² as supplied). The targeted add-on weight of binder was 20 wt% +/- 2 wt%. The sprayed webs were dried and cured in a Mathis LTE through air oven at 320 °F (160 °C) for 3 minutes.

### Test Methods

Test methods similar to industry standards, such as ASTM-D1117 (Mechanical Tensile Testing of Strength of Paper and Paperboard), TAPPI T-494 (dry tensile) and TAPPI T-456 (Wet Tensile Strength Determination Using Finch Cup Apparatus) were used to measure tensile strength.

The specific procedure for measuring wet tensile strength was as follows: The finished (bonded) dried and cured airlaid web was cut into 5 cm wide strips and the strips were looped around the finch cup apparatus that was then filled with the wet tensile fluid (either deionized water or deionized water with a small amount of a wetting agent was added, such as 0.5% (solids on solids) Aerosol-OT, a commercially available dioctyl sodium sulfosuccinate surfactant). TAPPI T-456 procedure was then followed.

An Instron Model 1122 mechanical tensile tester was used to measure dry and wet tensile strength. The tensile strength is reported in grams per 5 cm.

The molecular weight of the polymer was determined on the soluble fraction of the polymer and was measured in Daltons, a value similar to number average molecular weight.

Absorption Rate was determined by measuring the maximum absorbency capacity as a function of time in seconds. The rate is reported in grams of water absorbed per gram of web per second.

The procedure 100 grams of the aqueous solution (14.2% solids) was adjusted to pH 6 with 10% aqueous sodium hydroxide. To this dispersion was added 0.71 g Bacote 20 ammonium zirconium carbonate (1% solids on solids) and the resulting aqueous dispersion (0.71 g) was drizzled onto a weighed 7 cm Whatman #1 filter paper disk. The filter paper was dried for 20 minutes at 149 °C and then placed in a sealed plastic bag (prevent humidity absorption) in the controlled temperature and humidity room overnight. The test specimen was then weighed and the amount of polymer present was calculated. The specimen was then sandwiched between two virgin sheets of Whatman #1 filter paper and placed onto the sample holder of a Gravimetric Absorbency Test System (GATS) apparatus (from MK Systems) with a 0.07 psi weight on top to prevent the sample from floating away.

The composition of each polymer and method of preparation, and the testing results are reported in Table 1. Table 1 gives specific levels of internal crosslinking agent and crosslinking agent by weight of the total polymer. The wt % of monomers are based on the total weight of the polymer. AIRFLEX® 192 (A-192) self-crosslinking vinyl acetate/ethylene polymer emulsion was used as a control.

**Table 1**

| Example | Dry Tensile g/5 cm | Wet Tensile g/5 cm | Wet, % of A-192 | Wet, % of Comp 2 | Ab Rate g/g/sec | Wet to Dry Ratio | Veova wt% | Veova type | Ethylene wt% | NMA wt% | TAC wt% | Procedure |
|---|---|---|---|---|---|---|---|---|---|---|---|---|
| A-192 | 2751 | 1794 | 100 | 109.7 | 0.65 | 0.65 | | | | | 0 | |
| Comp 1 | 1745 | 1326 | 73.9 | 81.1 | 0.47 | 0.76 | 42.1 | 10 | 11.3 | 4.6 | 0 | Batched |
| Comp 2 | 2154 | 1636 | 91.2 | 100.0 | 0.71 | 0.76 | 21 | 10 | 11.3 | 4.6 | 0 | Batched |
| 3 * | 2078 | 1760 | 98.1 | 107.6 | 0.71 | 0.85 | 21 | 10 | 11.3 | 4.6 | 0.085 | Batched |
| 4 * | 1816 | 1642 | 91.5 | 100.4 | 0.72 | 0.90 | 42.8 | 10 | 11.3 | 5.3 | 0.011 | Batched¹ |
| 5 | 2580 | 2193 | 122.2 | 134.0 | 0.45 | 0.85 | 31.5 | 10 | 14.7 | 5.6 | 0.012 | 60 minute mark |
| 6 | 2496 | 2263 | 126.1 | 138.3 | 0.68 | 0.91 | 23 | 10 | 2.4 | 5.6 | 0.012 | 60 minute mark |
| 7 | 2667 | 2329 | 129.8 | 142.4 | 0.71 | 0.87 | 32.2 | 10 | 2.4 | 5.7 | 0.024 | At initiation |
| 8 * | 2384 | 1946 | 108.5 | 118.9 | 0.69 | 0.82 | 42.2 | 9 | 11 | 4.6 | 0 | Batched |
| 9 * | 2835 | 2051 | 114.3 | 125.4 | 0.64 | 0.72 | 43 | 9 | 9.5 | 4.5 | 0.018 | Batched |
| 10 * | 2484 | 1998 | 111.4 | 122.1 | 0.63 | 0.80 | 47.1 | 10 | 0 | 5.8 | 0.012 | Batched |
| 11 * | 2502 | 1567 | 87.3 | 95.8 | 0.68 | 0.63 | 8.6 | 10 | 9.2 | 4.6 | 0.086 | Batched |
| 12 * | 2403 | 1822 | 101.6 | 111.4 | 0.65 | 0.76 | 21.5 | 10 | 9.2 | 4.6 | 0.086 | Batched |
| 13 * | 2536 | 1629 | 90.8 | 99.6 | 0.63 | 0.64 | 15.5 | 10 | 9.2 | 4.6 | 0.067 | Batched |
| 14 * | 1759 | 1659 | 92.5 | 101.4 | 0.78 | 0.94 | 41.2 | 10 | 13.3 | 4.3 | 0.005 | Batched |
| 15 * | 1789 | 1636 | 91.2 | 100.0 | 0.75 | 0.91 | 41.2 | 10 | 13.3 | 4.3 | 0.016 | Batched |
| 16 | 2560 | 2207 | 123.0 | 134.9 | 0.69 | 0.86 | 32.4 | 10 | 2.4 | 5.2 | 0.024 | At initiation |
| | | | | | | | | | | | 0.024 | |
| 17 | 2593 | 2004 | 111.7 | 122.5 | 0.62 | 0.77 | 32.2 | 10 | 2.4 | 5.7 | HDODA | At initiation |
| 18 | 2336 | 2162 | 120.5 | 132.2 | 0.3 | 0.93 | 46.6 | 10 | 2.25 | 4.5 | 0.011 | Batched |
| | | | | | | | | | | 5.6 | | |
| 19 | 1889 | 1703 | 94.9 | 104.1 | 0.74 | 0.90 | 48.5 | 10 | 2.25 | w/AA | 0.025 | Batched¹ |

| | | | | | | | | | | | | |
|---|---|---|---|---|---|---|---|---|---|---|---|---|
| ¹ In these examples, most of the monomer was batched before the addition of the redox couple; however, a small amount of vinyl acetate and Veova was added at the 75-minute mark. A-192 = AIRFLEX 192 VAE polymer; NMA = N-methylol acrylamide TAC = triallylcyanurate; HDODA = 1,6-hexanediol diacrylate * = not part of the invention | | | | | | | | | | | | |

Comparative Examples 1 and 2 were performed in accordance with the preferred processing procedures expressed in Example 10 of US 2003/0176133 A1, in order to assess the effect of vinyl versatate level on the wet and dry tensile strength imparted to nonwoven products. The results show that as the level of vinyl versatate increased, the wet and dry tensile strength decreased as did the rate of absorbency.

Examples 11-13 show that as the level of vinyl versatate is increased, the wet and dry tensile strength increases when an internal crosslinker (TAC) is incorporated into the polymer backbone. It should be noted that superior results in terms of wet tensile strength can be achieved at a similar Veova 10 level to the polymers produced in the manner of Comparative Examples 1 and 2 and similar ethylene levels (Example 12 vs. Comparative Example 2); while lower levels of Veova 10, coupled with the addition of polymerized units of an internal crosslinking monomer, approximate the wet and dry strength of the Example 2 polymer (Example 11). Additionally, absorption rates remain high.

The rate of absorption decreases with respect to a significant Veova 10 level; compare Example 18 to Examples 11 and 13. But absorbency can be increased by addition of a small amount of acrylic acid (Example 19).

Examples 5-7, 16 and 17 show the effect of delayed addition of the Veova 10 to the polymerization process. When delayed or staged addition is combined with the addition of an internal crosslinking agent, superior wet and dry tensile strengths are achieved. It is believed this superiority is attributable to the formation of vinyl versatate rich polymer segments in the polymer. Similar wet to dry ratios are also achieved, compared to prior processes. Thus, it has been possible to boost the dry strength and corresponding wet strength of the nonwoven product in vinyl acetate/vinyl versatate based polymers and superior to vinyl acetate/ethylene/NMA based commercial binders for nonwoven products, by addition of an internal crosslinking agent and preferably when coupled with delayed addition of the vinyl versatate.

Summarizing, in all of the examples cited above, Veova was used to replace some of the vinyl acetate not only in pounds of material but also added to the reactor in the same fashion. For example, for the case where 50% of the vinyl acetate was replaced with Veova, 50% of the vinyl acetate in the pre-mix was replaced with Veova and 50% of the vinyl acetate in the delay was replaced with Veova. However, if the Veova is only added after most of the vinyl acetate has been polymerized, the amount of Veova required to dramatically improve the performace of the binder is significantly less.

A surprising feature of the polymers in Examples 1-19 is the relatively lower levels of Veova 10 required to achieve similar wet tensile strengths when the Veova is added with the different profile than the addition of vinyl acetate (refer to Examples 5 vs. 17 and 6 vs. 17).

Although not intending to be bound by theory, the staged polymerization employed in Examples 5 and 6, introduces Veova 10 after a significant portion of vinyl acetate has already polymerized. This can be viewed as a core-shell polymerization so that the shell of the particles is rich in the hydrophobic Veova molecules rather than the hydrophilic vinyl acetate chains.

Addition of an internal crosslinking agent also shows improvement in the wet and dry tensile strengths and, at a 20% add-on rate, wet tensile strengths of at least 1650, generally at least 1800 and, under preferred conditions, values in excess of 2000 g/5 cm can be obtained.

## Claims

1. Process for the production of a polymer suitable as a binder for a nonwoven product comprising a nonwoven web of fibers bonded together with a polymer comprised of polymerized units of vinyl acetate and vinyl versatate, and polymerized units of a crosslinking monomer, comprising incorporated polymerized units of a polyolefinically unsaturated monomer as an internal crosslinking agent into said polymer, **characterized by** copolymerizing 15 to 45% by weight of vinyl versatate, based upon the total weight of the polymer and forming said polymer by delaying the addition of vinyl versatate to the polymerization medium.

2. The process of Claim 1 wherein the polymer is comprised of from 30 to 90% by weight of polymerized units of vinyl acetate, from about 5 to 70% by weight of polymerized units of vinyl versatate, from 0 to 25% by weight ethylene and from 1 to 10% by weight of a crosslinking monomer, and 0.005 to 1.5 % by weight of the polyolefinically unsaturated monomer, based upon the total weight of the polymer.

3. The process of Claim 2 wherein the crosslinking monomer is N-methylol acrylamide.

4. The process of Claim 3 wherein said polymer has a T_{g} from 35 to -20 °C.

5. The process of anyone of claims 1 to 4 wherein the vinyl versatate is added to the polymerization medium such that a major amount of vinyl versatate is polymerized after a majority of the vinyl acetate has been polymerized.

6. The process of claim 5, wherein a portion of at least 35% of the vinyl acetate is polymerized prior to addition of vinyl versatate.

7. The process of Claim 1 wherein the polymer has from 3 to 8% crosslinking monomer by weight based upon the total weight of the polymer.

8. The process of Claim 7 wherein the insoluble fraction of said polymer in tetrahydrofuran is at least 55% by weight.

9. The process of Claim 7 wherein said polyolefinically unsaturated monomer is triallylcyanurate.

10. The process of Claim 7 wherein the polyolefinically unsaturated monomer is 1,6-hexanediol diacrylate.

11. The process of Claim 7 wherein wet tensile strength of the nonwoven web is at least 1650 g/5 cm as measured at a 20% add-on weight using TAPPI T-456 (Wet Tensile Strength Determination Using Finch Cup Apparatus).

12. The process of Claim 11 wherein the wet tensile strength is at least 2000 g/5 cm.

13. The process of Claim 12 wherein the polymer has from 3 to 8% by weight crosslinking monomer, based upon the total weight of the polymer.

14. The process of Claim 13 wherein the insoluble fraction of said polymer in tetrahydrofuran is at least 55% by weight.

15. The process of Claim 13 wherein said polyolefinically unsaturated monomer is triallylcyanurate.

## Patentansprüche

1. Verfahren zur Herstellung eines Polymers, das als ein Bindemittel für ein Vliesprodukt geeignet ist, das eine Vliesbahn aus Fasern einschließt, die mit einem Polymer untereinander gebunden sind, das aus polymerisierten Einheiten von Vinylacetat und Vinylversatat und polymerisierten Einheiten eines vernetzten Monomers, das in das Polymer eingearbeitete polymerisierte Einheiten eines polyolefinisch ungesättigten Monomers einschließt, als ein internes Vernetzungsmittel besteht, **gekennzeichnet durch** Copolymerisieren von 15 bis 45 Gew.-% Vinylversatat, bezogen auf das Gesamtgewicht des Polymers, und Bilden des Polymers **durch** Verzögern der Zugabe von Vinylversatat zu dem Polymerisationsmedium.

2. Das Verfahren nach Anspruch 1, wobei das Polymer aus 30 bis 90 Gew.-% von polymerisierten Einheiten von Vinylacetat, etwa 5 bis 70 Gew.-% von polymerisierten Einheiten von Vinylversatat, 0 bis 25 Gew.-% Ethylen und 1 bis 10 Gew.-% eines vernetzenden Monomers, und 0,005 bis 1,5 Gew.-% des polyolefinisch ungesättigten Monomers, bezogen auf das Gesamtgewicht des Polymers besteht.

3. Das Verfahren nach Anspruch 2, wobei das vernetzende Monomer N-Methylolacrylamid ist.

4. Das Verfahren nach Anspruch 3, wobei das Polymer eine Tg von 35 bis -20 aufweist.

5. Das Verfahren nach einem der Ansprüche 1 bis 4, wobei das Vinylversatat dem Polymerisationsmedium so zugesetzt wird, dass eine größere Menge von Vinylversatat polymerisiert wird, nachdem eine Mehrheit des Vinylacetats polymerisiert wurde.

6. Das Verfahren nach Anspruch 5, wobei ein Anteil von mindestens 35 % des Vinylacetats vor der Zugabe von Vinylversatat polymerisiert wird.

7. Das Verfahren nach Anspruch 1, wobei das Polymer 3 bis 8 % vernetzendes Monomer bezogen auf das Gewicht des Polymers aufweist.

8. Das Verfahren nach Anspruch 7, wobei die in Tetrahydrofuran unlösliche Fraktion des Polymers mindestens 55 Gew.-% beträgt.

9. Das Verfahren nach Anspruch 7, wobei das polyolefinisch ungesättigte Monomer Triallylcyanurat ist.

10. Das Verfahren nach Anspruch 7, wobei das polyolefinisch ungesättigte Monomer 1,6-Hexandioldiacrylat ist.

11. Das Verfahren nach Anspruch 7, wobei die Nasszugfestigkeit der Vliesbahn mindestens 1650 g/5 cm beträgt, wie gemessen bei einem Zusatzgewicht von 20 % unter Verwendung von TAPPI T-456 (Nasszugfestigkeitsbestimmung unter Verwendung des Finch-Cup-Geräts).

12. Das Verfahren nach Anspruch 11, wobei die Nasszugfestigkeit mindestens 2000 g/5 cm, beträgt.

13. Das Verfahren nach Anspruch 12, wobei das Polymer 3 bis 8 Gew.-% vernetzendes Monomer bezogen auf das Gesamtgewicht des Monomers aufweist.

14. Das Verfahren nach Anspruch 13, wobei die in Tetrahydrofuran unlösliche Fraktion des Polymers mindestens 55 Gew.-% beträgt.

15. Das Verfahren nach Anspruch 13, wobei das polyolefinisch ungesättigte Monomer Triallylcyanurat ist.

## Revendications

1. Procédé de production d'un polymère approprié comme liant pour un produit non tissé comprenant une bande non tissée de fibres liées conjointement avec un polymère constitué d'unités polymérisées d'acétate de vinyle et de versatate de vinyle, et d'unités polymérisées d'un monomère de réticulation, comprenant des unités polymérisées incorporées d'un monomère polyoléfiniquement insaturé comme agent de réticulation interne dans ledit polymère, **caractérisé par** la copolymérisation de 15 à 45% en poids de versatate de vinyle, sur base du poids total du polymère et par la formation dudit polymère en retardant l'addition du versatate de vinyle au milieu de polymérisation.

2. Procédé selon la revendication 1 dans lequel le polymère est constitué de 30 à 90% en poids d'unités polymérisées d'acétate de vinyle, d'environ 5 à 70% en poids d'unités polymérisées de versatate de vinyle, de 0 à 25% en poids d'éthylène et de 1 à 10% en poids d'un monomère de réticulation, et de 0,005 à 1,5% en poids du monomère polyoléfiniquement insaturé, sur base du poids total du polymère.

3. Procédé selon la revendication 2 dans lequel le monomère de réticulation est du N-méthylol-acrylamide.

4. Procédé selon la revendication 3 dans lequel ledit polymère a une Tg de 35 à -20°C.

5. Procédé selon l'une quelconque des revendications 1 à 4 dans lequel le versatate de vinyle est ajouté au milieu de polymérisation de telle sorte qu'une quantité majeure de versatate de vinyle est polymérisée après polymérisation d'une majorité de l'acétate de vinyle.

6. Procédé selon la revendication 5, dans lequel une portion d'au moins 35% de l'acétate de vinyle est polymérisée avant l'addition de versatate de vinyle.

7. Procédé selon la revendication 1 dans lequel le polymère a de 3 à 8% de monomère de réticulation en poids sur base du poids total du polymère.

8. Procédé selon la revendication 7 dans lequel la fraction insoluble dudit polymère dans du tétrahydrofuranne est au moins de 55% en poids.

9. Procédé selon la revendication 7 dans lequel ledit monomère polyoléfiniquement insaturé est du triallylcyanurate.

10. Procédé selon la revendication 7 dans lequel le monomère polyoléfiniquement insaturé est du 1,6- hexanediol diacrylate.

11. Procédé selon la revendication 7 dans lequel la résistance à la traction à l'état humide de la bande non tissée est au moins de 1650 g/5 cm comme mesurée à un poids complémentaire de 20% en utilisant TAPPI T-456 (détermination de la résistance à la traction à l'état humide en utilisant un appareil de type à pince de Finch).

12. Procédé selon la revendication 11 dans lequel la résistance à la traction à l'état humide est au moins de 2000 g/5 cm.

13. Procédé selon la revendication 12 dans lequel le polymère a de 3 à 8% en poids de monomère de réticulation, sur base du poids total du polymère.

14. Procédé selon la revendication 13 dans lequel la fraction insoluble dudit polymère dans du tétrahydrofuranne est d'au moins 55% en poids.

15. Procédé selon la revendication 13 dans lequel ledit monomère polyoléfiniquement insaturé est du triallylcyanurate.
